# EUROPEAN PATENT APPLICATION

(11) **EP 3 913 023 A1**
(43) Date of publication of application: **24.11.2021**
(21) Application number: 21168253.9
(22) Date of filing: 14.04.2021
(51) Int. Cl.: C09D 5/02, A41D 19/00, C08J 7/04, C09D 7/63, C09D 7/65, B29C 41/14

(54) **GLOVES WITH HYDROPHILIC COATING AND METHOD OF MANUFACTURING THEREOF**

(30) Priority: 22.04.2020 MY PI2020002005
(71) Applicant: TOP GLOVE INTERNATIONAL SDN. BHD., 41050 Klang Selangor (MY)
(72) Inventor: WONG, CHONG BAN, 41050 KLANG, SELANGOR (MY); LING, SIEW SZEN, 41050 KLANG, SELANGOR (MY); LOW, MENG LAI, 41050 KLANG, SELANGOR (MY); MAT ZANI, SITI HAJAR, 41050 KLANG, SELANGOR (MY)
(74) Representative: Schiweck Weinzierl Koch Patentanwälte Partnerschaft mbB

(57) **Abstract**

A hydrophilic coating includes silicone emulsion, wax dispersion, stearate based chemical, surfactant and water. Further, the present invention discloses a method of preparing a glove with hydrophilic coating using either chlorinated or polymer coated method, wherein the glove is any one from the group consisting of acrylonitrile butadiene rubber, natural rubber, polyisoprene rubber, polychloroprene rubber, styrene butadiene rubber, butadiene copolymers rubber, polyurethanes rubber, rubber of vinyl containing substances, thermoplastic elastomer, vinyl acetate ethylene rubber and mixtures thereof.

## Description

### FIELD OF THE INVENTION

The present invention relates to an elastomeric product with hydrophilic coating and method of manufacturing therefrom, in particular the present invention relates to a disposable elastomeric glove with hydrophilic coating applied on the interior surface of the elastomeric glove. The hydrophilic coating improves the donning of disposable elastomeric glove under both dry and wet conditions, as well as improves surface hydrophilicity of the disposable elastomeric glove.

### BACKGROUND OF THE INVENTION

Conventional chlorinated gloves in general are produced by way of subjecting gloves on formers with chlorine solution treatment. This reduces surface friction and tackiness on the interior of the gloves. At times the gloves are washed in an aqueous alkaline solution (i.e. potassium hydroxide or ammonia) after the chlorine treatment, thereafter with water and finally dried to produce a glove that dons easily.

Meanwhile, conventional polymer coated gloves are produced by way of applying a polymer coating on the interior surface of the glove, resulting in a smooth finish for easy donning. Both chlorination and polymer coating approaches are effective at generating gloves that dons and doffs easily.

However, both conventional chlorinated and polymer coated gloves are found to be lacking in surface hydrophilic properties whereby wearer will have difficulties in donning the gloves when wearer's hand is under wet or sweaty conditions. Hence, the wearer would take longer than usual to don a glove when his/her hand is under wet or sweaty conditions and/or during the process of changing to another glove.

Having said the above, it is obvious that the existing conventional gloves have their own disadvantages. As such, there is a need to identify a suitable approach such as but not limited to applying a hydrophilic coating onto the conventional gloves so that it could improve the surface hydrophilic properties of the gloves and in return the gloves are able to be donned one after another easily under both dry and wet conditions, particularly under wet condition without affecting the donning performance and efficiency of glove users.

### SUMMARY OF THE INVENTION

The present invention relates to an hydrophilic coating composition (solution) that includes a silicone emulsion, a wax dispersion, a stearate based chemical, a surfactant and water, wherein the silicone emulsion is used at weight concentration ranging between 0.01% to 1.0% in the hydrophilic coating composition, wherein the wax dispersion is used at weight concentration ranging between 0.01% to 1.0% in the hydrophilic coating composition, wherein the stearate based chemical is used at weight concentration ranging between 0.01% to 1.0% in the hydrophilic coating composition, wherein the surfactant is used at weight concentration ranging between 0.4% to 2.0% in the hydrophilic coating composition and wherein remaining of the hydrophilic coating composition is filled by the water to a weight concentration of 100.00%.

Also, the present invention discloses a method of preparing a glove with hydrophilic coating as disclosed above using either chlorinated or polymer coated method, wherein the glove is any one from the group consisting of acrylonitrile butadiene rubber, natural rubber, polyisoprene rubber, polychloroprene rubber, styrene butadiene rubber, butadiene copolymers rubber, polyurethanes rubber, rubber of vinyl containing substances, thermoplastic elastomer, vinyl acetate ethylene rubber and mixtures thereof.

Additional aspects, features and advantages of the invention will become apparent to those skilled in the art upon consideration of the following detailed description of preferred embodiments of the invention.

### DETAILED DESCRIPTION OF THE INVENTION

Detailed description of preferred embodiments of the present invention is disclosed herein. It should be understood, however, that the embodiments are merely exemplary of the present invention, which may be embodied in various forms. Therefore, the details disclosed herein are not to be interpreted as limiting, but merely as the basis for the claims and for teaching one skilled in the art of the invention. The numerical data or ranges used in the specification are not to be construed as limiting.

The present invention relates to an elastomeric product with hydrophilic coating and method of manufacturing therefrom, in particular the present invention relates to a disposable elastomeric glove with hydrophilic coating applied on the interior surface of the elastomeric glove, wherein the hydrophilic coating of the present invention improves donning the disposable elastomeric glove under both dry and wet conditions, as well as improves surface hydrophilicity of the disposable elastomeric glove, which will be further detailed in the example section (i.e. particularly see Tables 7 to 11).

The elastomeric glove is any one selected from the group consisting of acrylonitrile butadiene rubber (NBR) glove, natural rubber (NR) glove, polyisoprene (PI) rubber glove, polychloroprene rubber (CR) glove and mixtures thereof. The present invention may also be extended to gloves selected from the group consisting of styrene butadiene rubber, butadiene copolymers rubber, polyurethanes rubber, rubber of vinyl containing substances, thermoplastic elastomer (TPE), vinyl acetate ethylene (VAE) rubber and mixtures thereof. The glove of the present invention may be used in variety of applications such as but not limited to cleanroom, food handling, cosmetic, biomedical, semiconductor, electrical and/or healthcare.

The glove with hydrophilic coating of the present invention is prepared by way of adopting a method commonly known in the glove manufacturing industry, wherein the method is modified with additional step of either:
1. spraying hydrophilic solution onto post-leached latex film coated on the former; or
2. dipping post-leached latex film coated on the former into hydrophilic solution
during online process to produce glove with hydrophilic coating, which will be further detailed below. The hydrophilic coating of the present invention may be one or more layer(s).

### Chlorinated glove with hydrophilic coating

The method to prepare the glove with hydrophilic coating (as stated above) comprises the steps of:
i. cleaning/washing formers to produce cleaned formers, wherein the first step is treatment using acidic solutions, the second step is treatment using alkaline solutions, the third step is washing using water, the fourth step is brushing and the fifth step is washing using water, wherein all first, second, third and fifth steps are carried out at a temperature ranging between 50°C to 70°C for a duration ranging between 3 seconds to 10 seconds, wherein the acidic solution may be selected from the group consisting of any one or mixtures of inorganic acid, any mixtures of organic acid and inorganic acid and any above combination with addition of surfactant or additives, wherein the alkaline solution may be selected from the group consisting of sodium hydroxide, potassium hydroxide, mixtures thereof and any one of the above with addition of hypochlorite based chemicals, surfactant or builder, wherein the acid is used in a concentration ranging from 0.4% to 4.0%, wherein the alkali is used in a concentration ranging from 0.5% to 8.0%, wherein the third and fifth steps of washing are carried out to ensure complete removal of any excessive acidic and/or alkaline solutions remaining on the formers and wherein the brushing is carried out to ensure the former surface is cleaned;
ii. dipping the cleaned formers obtained in step (i) into a coagulant solution at a temperature between 40°C to 65°C for a time period ranging from 4 seconds to 30 seconds to coat a coagulant layer on the former, wherein the coagulant solution is any conventional coagulant solution;
iii. drying the coagulant layer coated on the former obtained in step (ii) at a temperature between 80°C to 200°C for a time period ranging from 1 minute to 10 minutes;
iv. dipping the former obtained in step (iii) into first latex formulation at a temperature between 20°C to 40°C for a time period ranging from 4 seconds to 30 seconds to produce a first latex layer, wherein the first latex layer has a total solid content of 5% by weight to 40% by weight;
v. drying the first latex layer coated on the former obtained in step (iv) at a temperature between 80°C to 150°C for a time period ranging from 20 seconds to 5 minutes;
vi. dipping the former obtained in step (v) into second latex formulation at a temperature between 20°C to 40°C for a time period ranging from 4 seconds to 30 seconds to produce a second latex layer, wherein the second latex layer has a total solid content of 5% by weight to 40% by weight;
vii. drying the second latex layer coated on the former obtained in step (vi) at a temperature between 80°C to 200°C for a time period ranging from 20 seconds to 5 minutes;
viii. treating the second latex layer coated on the former obtained in step (vii) with hot water at a temperature between 40°C to 80°C for a time period ranging from 20 seconds to 5 minutes to leach out chemical residues to form pre-leached latex film;
ix. beading the pre-leached latex film coated on the former obtained in step (viii) to produce beaded latex film, wherein the beading is performed using roll brush and/or beading carpet to bead the end of latex film;
x. curing the beaded latex film coated on the former obtained in step (ix) at a temperature between 90°C to 150°C for a time period ranging from 5 minutes to 45 minutes and thereafter cooled to produce cooled latex film, wherein the step of cooling is carried out by way of dipping the cured latex film coated on the former into cold water having a temperature ranging between 20°C to 40°C for a time period ranging between 20 seconds to 5 minutes;
xi. treating the cooled latex film coated on the former obtained in step (x) with chlorine water at a temperature ranging between 20°C to 50°C for a time period ranging from 10 seconds to 60 seconds to obtain treated latex film;
xii. treating the treated latex film coated on the former obtained in step (xi) with hot water at a temperature between 40°C to 80°C for a time period ranging from 20 seconds to 5 minutes to leach out chemical residues to obtain post-leached latex film;
xiii. spraying hydrophilic solution onto the post-leached latex film coated on the former obtained in step (xii) or dipping the post-leached latex film coated on the former obtained in step (xii) into hydrophilic solution to obtain latex film with hydrophilic coating;
xiv. drying the latex film with hydrophilic coating coated on the former obtained in step (xiii) at a temperature between 80°C to 200°C for a time period ranging from 20 seconds to 5 minutes to produce glove with hydrophilic coating; and
xv. stripping the glove with hydrophilic coating coated on the former obtained in step (xiv) from the former; and
wherein the first and the second latex formulations are identical latex formulation.

### Polymer coated glove with hydrophilic coating

The method to prepare the glove with hydrophilic coating (as stated above) comprises the steps of:
i. cleaning/washing formers to produce cleaned formers, wherein the first step is treatment using acidic solutions, the second step is treatment using alkaline solutions, the third step is washing using water, the fourth step is brushing and the fifth step is washing using water, wherein all first, second, third and fifth steps are carried out at a temperature ranging between 50°C to 70°C for a duration ranging between 3 seconds to 10 seconds, wherein the acidic solution may be selected from the group consisting of any one or mixtures of inorganic acid, any mixtures of organic acid and inorganic acid and any above combination with addition of surfactant or additives, wherein the alkaline solution may be selected from the group consisting of sodium hydroxide, potassium hydroxide, mixtures thereof and any one of the above with addition of hypochlorite based chemicals, surfactant or builder, wherein the acid is used in a concentration ranging from 0.4% to 4.0%, wherein the alkali is used in a concentration ranging from 0.5% to 8.0%, wherein the third and fifth steps of washing are carried out to ensure complete removal of any excessive acidic and/or alkaline solutions remaining on the formers and wherein the brushing is carried out to ensure the former surface is cleaned;
ii. dipping the cleaned formers obtained in step (i) into a coagulant solution at a temperature between 40°C to 65°C for a time period ranging from 4 seconds to 30 seconds to coat a coagulant layer on the former, wherein the coagulant solution is any conventional coagulant solution;
iii. drying the coagulant layer coated on the former obtained in step (ii) at a temperature between 80°C to 200°C for a time period ranging from 1 minute to 10 minutes;
iv. dipping the former obtained in step (iii) into first latex formulation at a temperature between 20°C to 40°C for a time period ranging from 4 seconds to 30 seconds to produce a first latex layer, wherein the first latex layer has a total solid content of 5% by weight to 40% by weight;
v. drying the first latex layer coated on the former obtained in step (iv) at a temperature between 80°C to 150°C for a time period ranging from 20 seconds to 5 minutes;
vi. dipping the former obtained in step (v) into second latex formulation at a temperature between 20°C to 40°C for a time period ranging from 4 seconds to 30 seconds to produce a second latex layer, wherein the second latex layer has a total solid content of 5% by weight to 40% by weight;
vii. drying the second latex layer coated on the former obtained in step (vi) at a temperature between 80°C to 200°C for a time period ranging from 20 seconds to 5 minutes;
viii. treating the second latex layer coated on the former obtained in step (vii) with hot water at a temperature between 40°C to 80°C for a time period ranging from 20 seconds to 5 minutes to leach out chemical residues to form pre-leached latex film;
ix. treating the pre-leached latex film coated on the former obtained in step (viii) with polymer solution for a time period ranging from 4 seconds to 30 seconds to produce polymer coated latex film, wherein the polymer coating is carried out by way of dipping the pre-leached latex film coated on the former into the polymer solution having a concentration ranging between 1.5% to 5.0%;
x. beading the polymer coated latex film coated on the former obtained in step (ix) to produce beaded latex film, wherein the beading is performed using roll brush and/or beading carpet to bead the end of latex film;
xi. curing the beaded latex film coated on the former obtained in step (x) at a temperature between 90°C to 150°C for a time period ranging from 5 minutes to 45 minutes to cured latex film;
xii. treating the cured latex film coated on the former obtained in step (xi) with hot water at a temperature between 40°C to 80°C for a time period ranging from 20 seconds to 5 minutes to leach out chemical residues to obtain post-leached latex film;
xiii. spraying hydrophilic solution onto the post-leached latex film coated on the former obtained in step (xii) or dipping the post-leached latex film coated on the former obtained in step (xii) into hydrophilic solution to obtain latex film with hydrophilic coating;
xiv. drying the latex film with hydrophilic coating coated on the former obtained in step (xiii) at a temperature between 80°C to 200°C for a time period ranging from 20 seconds to 5 minutes to produce glove with hydrophilic coating; and
xv. stripping the glove with hydrophilic coating coated on the former obtained in step (xiv) from the former; and
wherein the first and the second latex formulations are identical latex formulation.

The first and the second latex formulations includes:
latex (such as but not limited to acrylonitrile butadiene rubber (NBR), natural rubber (NR), polyisoprene (PI) rubber, polychloroprene rubber (CR) or mixtures thereof);
pH adjuster (such as but not limited to ammonia (primary pH adjuster), potassium hydroxide (secondary pH adjuster) and mixtures thereof, however may also use sodium hydroxide);
accelerator (any commercially available accelerator);
crosslinking agent (such as but not limited to sulphur (primary crosslinking agent) and/or zinc oxide (secondary crosslinking agent));
pigment (such as but not limited to titanium dioxide);
filler/reinforcing agent (such as but not limited to functional silicate filler or calcium carbonate);
activator (such as but not limited to zinc oxide);
stabilizer (any commercially available stabilizer);
antioxidant (such as but not limited to phenolic antioxidant);
anti tack agent (such as but not limited to paraffin wax emulsion); and
anti foaming agent (such as but not limited to organo modified siloxanes type defoamer).

Tables 1 to 5 show chemical components (as listed above) and compositions thereof used in preparing the first and the second latex formulations.

**Table 1: Chemical components and compositions thereof to prepare the first and the second latex formulations of NBR**

| **Chemicals components** | **Typical range (*phr)** |
|---|---|
| NBR latex | 100 |
| Primary pH adjuster | 0.3 to 5.0 |
| Secondary pH adjuster | 1.0 to 5.0 |
| Stabilizer | 0.1 to 5.0 |
| Accelerator | 0.1 to 10.0 |
| Primary crosslinking agent | 0.5 to 5.0 |
| Filler | 0.1 to 20.0 |
| Pigment | 0.2 to 2.0 |
| Antioxidant | 0.1 to 1.0 |
| Anti tack agent | 0.2 to 5.0 |
| Anti foaming agent | 0.05 to 0.20 |

| | |
|---|---|
| *parts per hundred of rubber | |

**Table 2: Chemical components and compositions thereof to prepare the first and the second latex formulations of NR**

| **Chemicals components** | **Typical range (*phr)** |
|---|---|
| NR Latex | 100 |
| Primary pH adjuster | 0.2 to 1.0 |
| Secondary pH adjuster | 0.1 to 1.0 |
| Pigment | 0.1 to 5.0 |
| Antioxidant | 0.1 to 1.0 |
| Primary crosslinking agent | 0.2 to 5.0 |
| Accelerator | 0.2 to 10.0 |
| Activator | 0.0 to 5.0 |
| Anti foaming agent | 0.1 to 1.0 |
| Anti tack agent | 1.0 to 5.0 |
| Stabilizer | 0.2 to 5.0 |
| Filler | 40.0 to 50.0 |

| | |
|---|---|
| *parts per hundred of rubber | |

**Table 3: Chemical components and compositions thereof to prepare the first and the second latex formulations of CR**

| **Chemicals components** | **Typical range (*phr)** |
|---|---|
| CR Latex | 100 |
| Primary pH adjuster | 0.1 to 5.0 |
| Secondary pH adjuster | 0.1 to 5.0 |
| Stabilizer | 0.1 to 5.0 |
| Primary crosslinking agent | 0.5 to 5.0 |
| Secondary crosslinking agent | 1.0 to 5.0 |
| Accelerator | 0.2 to 5.0 |
| Antioxidant | 0.5 to 1.0 |
| Anti tack agent | 0.3 to 1.0 |
| Anti foaming agent | 0.05 to 1.0 |

| | |
|---|---|
| *parts per hundred of rubber | |

**Table 4: Chemical components and compositions thereof to prepare the first and the second latex formulations of CR & NBR hybrid**

| **Chemicals components** | **Typical range (*phr)** |
|---|---|
| CR Latex | 50.0 to 100 |
| NBR Latex | 50.0 to 100 |
| Primary pH adjuster | 0.1 to 1.0 |
| Secondary pH adjuster | 0.1 to 1.0 |
| Pigment | 0.2 to 1.0 |
| Antioxidant | 0.6 to 1.0 |
| Primary crosslinking agent | 0.5 to 5.0 |
| Secondary crosslinking agent | 1.0 to 5.0 |
| Accelerator | 0.0 to 0.5 |
| Anti foaming agent | 0.05 to 1.0 |
| Anti tack agent | 0.4 to 1.0 |
| Stabilizer | 0.1 to 1.0 |

| | |
|---|---|
| *parts per hundred of rubber | |

**Table 5: Chemical components and compositions thereof to prepare the first and the second latex formulations of PI**

| **Chemicals components** | **Typical range (*phr)** |
|---|---|
| PI Latex | 100 |
| Primary pH adjuster | 0.3 to 1.0 |
| Secondary pH adjuster | 0.1 to 1.0 |
| Stabilizer | 0.2 to 1.0 |
| Primary crosslinking agent | 1.0 to 5.0 |
| Secondary crosslinking agent | 2.0 to 5.0 |
| Accelerator | 0.5 to 5.0 |
| Antioxidant | 0.5 to 1.0 |
| Pigment | 0.3 to 5.0 |

| | |
|---|---|
| *parts per hundred of rubber | |

The spraying method (which is an online process) to coat the hydrophilic solution onto the post-leached latex film coated on the former is carried out by way of but not limited to spraying the hydrophilic solution using any conventional liquid sprayer onto the post-leached latex film coated on the former at a temperature ranging between 30°C to 70°C, preferably 50°C for a duration ranging between 6 seconds to 25 seconds, preferably 10 seconds, wherein the hydrophilic solution is used at a weight concentration ranging between 0.1% to 5.0%, preferably 1.0%.

Further, the liquid sprayer may be handled with but not limited to spraying speed between 1 litre per minute to 5 litres per minute, preferably 3 litres per minute at a pressure between 0.1 bar to 3 bar, preferably 1.0 bar under a temperature ranging between 30°C to 50°C, preferably 40°C.

The post-leached latex film coated on the former is continuously rotated during and after the spraying step to ensure even coating for a duration ranging between 5 seconds to 60 seconds, preferably 30 seconds to yield the latex film with hydrophilic coating. Thereafter, the latex film with hydrophilic coating is dried at a temperature ranging between 80°C to 200°C for a time period ranging from 20 seconds to 5 minutes to produce glove with hydrophilic coating.

Meanwhile, the coating method to coat the hydrophilic solution onto the post-leached latex film coated on the former is carried out by way of but not limited to dipping the post-leached latex film coated on the former in a container containing the hydrophilic solution at a temperature ranging between 30°C to 70°C, preferably 50°C for a duration ranging between 6 seconds to 25 seconds, preferably 10 seconds to yield the latex film with hydrophilic coating, wherein the hydrophilic solution is used at a weight concentration ranging between 0.1% to 5.0%, preferably 1.0%. Thereafter, the latex film with hydrophilic coating is dried at a temperature ranging between 80°C to 200°C for a time period ranging from 20 seconds to 5 minutes to produce glove with hydrophilic coating.

The hydrophilic solution includes silicone emulsion, wax dispersion (or may also be called as wax emulsion), stearate based chemical, surfactant and water. The silicone emulsion is any one selected from the group consisting of polydimethylsiloxane silicone emulsion, amino type silicone, organo functional silicone emulsion, resin type silicone emulsion, film forming silicone and mixtures thereof, preferably polydimethylsiloxane silicone emulsion. The silicone emulsion serves as a slip agent to improve slip performance and to reduce surface friction. The wax dispersion is any one selected from the group consisting of high density polyethylene wax, low density polyethylene wax, polypropylene wax, paraffin wax, carnauba wax, polytetrafluoroethylene wax and mixtures thereof, preferably high density polyethylene wax. The wax dispersion serves as an anti tack agent and contributes to slip improvement.

The stearate based chemical is any one selected from the group consisting of potassium stearate, calcium stearate, magnesium stearate, zinc stearate and mixtures thereof, preferably potassium stearate. The stearate based chemical serves as a lubricating agent and it is a material to improve anti blocking properties and to improve damp donning performance.
The surfactant is any one selected from the group consisting of any anionic surfactant, any cationic surfactant and mixtures thereof, wherein the anionic surfactant is preferably sodium lauryl ether sulphate and wherein the cationic surfactant is preferably cetylpyridinium chloride. The surfactant serves as a slip agent and stabilizer and it is a material to establish donning performance under wet and damp conditions.

Table 6 shows chemical components (as listed above) and compositions thereof used in preparing the hydrophilic solution (composition).

**Table 6: Chemical components and compositions thereof to prepare the hydrophilic solution.**

| **Chemical components** | **Working range (weight concentration, %)** | **Preferred range (weight concentration, %)** | **Typical dosage (weight concentration, %)** |
|---|---|---|---|
| Silicone emulsion | 0.01 to 1.0 | 0.05 to 0.5 | 0.1 |
| High density polyethylene wax | 0.01 to 1.0 | 0.05 to 0.5 | 0.1 |
| Stearate based chemical | 0.01 to 1.0 | 0.1 to 0.5 | 0.2 |
| Surfactant | 0.4 to 2.0 | 0.5 to 1.0 | 0.6 |

The hydrophilic solution has a pH value ranging between 6 to 11. Final total active content (in weight concentration) of the hydrophilic solution is in a range between 0.01% to 5.0%, preferably 1.0% with remaining content being water making it to a weight concentration of 100%.

The glove with hydrophilic coating prepared in the present invention is able to achieve:
i. reduced hydrophilicity with contact angle as low as 6° to 10° at 5s;
ii. successive donning (up to three gloves) under both dry and wet conditions at duration between 1s to 5s and between 5s to 12s respectively for each donning without affecting the dry and wet donning performances;
iii. improved donning performance for outer glove in double glove donning, whereby the donning is accomplished at a duration between 2s to 5s;
iv. average dry and wet coefficient of frictions between 0.19 to 0.24 and 0.17 to 0.27 respectively; and
v. average surface roughness between 0.4 µm to 1.2 µm
which will be further detailed in Tables 7 to 11 in the example section.

The following examples are constructed to illustrate the present invention in a nonlimiting sense.

### Example 1:

### Hydrophilic solution

The hydrophilic solution includes silicone emulsion, wax dispersion, stearate based chemical, surfactant and water.

The silicone emulsion is any one selected from the group consisting of polydimethylsiloxane silicone emulsion, amino type silicone, organo functional silicone emulsion, resin type silicone emulsion, film forming silicone and mixtures thereof, preferably polydimethylsiloxane silicone emulsion. The silicone emulsion serves as a slip agent to improve slip performance and to reduce surface friction.

The wax dispersion is any one selected from the group consisting of high density polyethylene wax, low density polyethylene wax, polypropylene wax, paraffin wax, carnauba wax, polytetrafluoroethylene wax and mixtures thereof, preferably high density polyethylene wax. The wax dispersion serves as a anti tack agent and it contributes to slip improvement.

The stearate based chemical is any one selected from the group consisting of potassium stearate, calcium stearate, magnesium stearate, zinc stearate and mixtures thereof, preferably potassium stearate. The stearate based chemical serves as a lubricating agent and it is a material to improve anti blocking properties and to improve damp donning performance.

The surfactant is any one selected from the group consisting of any anionic surfactant, any cationic surfactant and mixtures thereof, wherein the anionic surfactant is preferably sodium lauryl ether sulphate and wherein the cationic surfactant is preferably cetylpyridinium chloride. The surfactant serves as a slip agent and stabilizer and it is a material to establish donning performance under wet and damp conditions.

The silicone emulsion is used at weight concentration ranging between 0.01% to 1.0%, preferably is used at weight concentration ranging between 0.05% to 0.5%, still preferably is used at weight concentration 0.1% in the hydrophilic solution.

The wax dispersion is used at weight concentration ranging between 0.01% to 1.0%, preferably is used at weight concentration ranging between 0.05% to 0.5%, still preferably is used at weight concentration 0.1% in the hydrophilic solution.

The stearate based chemical is used at weight concentration ranging between 0.01% to 1.0%, preferably is used at weight concentration ranging between 0.1% to 0.5%, still preferably is used at weight concentration 0.2% in the hydrophilic solution.

The surfactant is used at weight concentration ranging between 0.4% to 2.0%, preferably is used at weight concentration ranging between 0.5% to 1.0%, still preferably is used at weight concentration 0.6% in the hydrophilic solution.

Remaining content being water making it to a weight concentration of 100%.

### Example 2:

### Chlorinated glove with hydrophilic coating

The method to prepare the glove with hydrophilic coating (as stated above) comprises the steps of:
i. cleaning/washing formers to produce cleaned formers, wherein the first step is treatment using acidic solutions, the second step is treatment using alkaline solutions, the third step is washing using water, the fourth step is brushing and the fifth step is washing using water, wherein all first, second, third and fifth steps are carried out at a temperature ranging between 50°C to 70°C for a duration ranging between 3 seconds to 10 seconds, wherein the acidic solution may be selected from the group consisting of any one or mixtures of inorganic acid, any mixtures of organic acid and inorganic acid and any above combination with addition of surfactant or additives, wherein the alkaline solution may be selected from the group consisting of sodium hydroxide, potassium hydroxide, mixtures thereof and any one of the above with addition of hypochlorite based chemicals, surfactant or builder, wherein the acid is used in a concentration ranging from 0.4% to 4.0%, wherein the alkali is used in a concentration ranging from 0.5% to 8.0%, wherein the third and fifth steps of washing are carried out to ensure complete removal of any excessive acidic and/or alkaline solutions remaining on the formers and wherein the brushing is carried out to ensure the former surface is cleaned;
ii. dipping the cleaned formers obtained in step (i) into a coagulant solution at a temperature between 40°C to 65°C for a time period ranging from 4 seconds to 30 seconds to coat a coagulant layer on the former wherein the coagulant solution is any conventional coagulant solution;
iii. drying the coagulant layer coated on the former obtained in step (ii) at a temperature between 80°C to 200°C for a time period ranging from 1 minute to 10 minutes;
iv. dipping the former obtained in step (iii) into first latex formulation at a temperature between 20°C to 40°C for a time period ranging from 4 seconds to 30 seconds to produce a first latex layer, wherein the first latex layer has a total solid content of 5% by weight to 40% by weight;
v. drying the first latex layer coated on the former obtained in step (iv) at a temperature between 80°C to 150°C for a time period ranging from 20 seconds to 5 minutes;
vi. dipping the former obtained in step (v) into second latex formulation at a temperature between 20°C to 40°C for a time period ranging from 4 seconds to 30 seconds to produce a second latex layer, wherein the second latex layer has a total solid content of 5% by weight to 40% by weight;
vii. drying the second latex layer coated on the former obtained in step (vi) at a temperature between 80°C to 200°C for a time period ranging from 20 seconds to 5 minutes;
viii. treating the second latex layer coated on the former obtained in step (vii) with hot water at a temperature between 40°C to 80°C for a time period ranging from 20 seconds to 5 minutes to leach out chemical residues to form pre-leached latex film;
ix. beading the pre-leached latex film coated on the former obtained in step (viii) to produce beaded latex film, wherein the beading is performed using roll brush and/or beading carpet to bead the end of latex film;
x. curing the beaded latex film coated on the former obtained in step (ix) at a temperature between 90°C to 150°C for a time period ranging from 5 minutes to 45 minutes and thereafter cooled to produce cooled latex film, wherein the step of cooling is carried out by way of dipping the cured latex film coated on the former into cold water having a temperature ranging between 20°C to 40°C for a time period ranging between 20 seconds to 5 minutes;
xi. treating the cooled latex film coated on the former obtained in step (x) with chlorine water at a temperature ranging between 20°C to 50°C for a time period ranging from 10 seconds to 60 seconds to obtain treated latex film;
xii. treating the treated latex film coated on the former obtained in step (xi) with hot water at a temperature between 40°C to 80°C for a time period ranging from 20 seconds to 5 minutes to leach out chemical residues to obtain post-leached latex film;
xiii. spraying hydrophilic solution onto the post-leached latex film coated on the former obtained in step (xii) or dipping the post-leached latex film coated on the former obtained in step (xii) into hydrophilic solution to obtain latex film with hydrophilic coating;
xiv. drying the latex film with hydrophilic coating coated on the former obtained in step (xiii) at a temperature between 80°C to 200°C for a time period ranging from 20 seconds to 5 minutes to produce glove with hydrophilic coating; and
xv. stripping the glove with hydrophilic coating coated on the former obtained in step (xiv) from the former; and
wherein the first and the second latex formulations are identical latex formulation and wherein the first and the second latex formulations includes chemical components and compositions thereof as described in Tables 1 to 5.

### Polymer coated glove with hydrophilic coating

The method to prepare the glove with hydrophilic coating (as stated above) comprises the steps of:
i. cleaning/washing formers to produce cleaned formers, wherein the first step is treatment using acidic solutions, the second step is treatment using alkaline solutions, the third step is washing using water, the fourth step is brushing and the fifth step is washing using water, wherein all first, second, third and fifth steps are carried out at a temperature ranging between 50°C to 70°C for a duration ranging between 3 seconds to 10 seconds, wherein the acidic solution may be selected from the group consisting of any one or mixtures of inorganic acid, any mixtures of organic acid and inorganic acid and any above combination with addition of surfactant or additives, wherein the alkaline solution may be selected from the group consisting of sodium hydroxide, potassium hydroxide, mixtures thereof and any one of the above with addition of hypochlorite based chemicals, surfactant or builder, wherein the acid is used in a concentration ranging from 0.4% to 4.0%, wherein the alkali is used in a concentration ranging from 0.5% to 8.0%, wherein the third and fifth steps of washing are carried out to ensure complete removal of any excessive acidic and/or alkaline solutions remaining on the formers and wherein the brushing is carried out to ensure the former surface is cleaned;
ii. dipping the cleaned formers obtained in step (i) into a coagulant solution at a temperature between 40°C to 65°C for a time period ranging from 4 seconds to 30 seconds to coat a coagulant layer on the former, wherein the coagulant solution is any conventional coagulant solution;
iii. drying the coagulant layer coated on the former obtained in step (ii) at a temperature between 80°C to 200°C for a time period ranging from 1 minute to 10 minutes;
iv. dipping the former obtained in step (iii) into first latex formulation at a temperature between 20°C to 40°C for a time period ranging from 4 seconds to 30 seconds to produce a first latex layer, wherein the first latex layer has a total solid content of 5% by weight to 40% by weight;
v. drying the first latex layer coated on the former obtained in step (iv) at a temperature between 80°C to 150°C for a time period ranging from 20 seconds to 5 minutes;
vi. dipping the former obtained in step (v) into second latex formulation at a temperature between 20°C to 40°C for a time period ranging from 4 seconds to 30 seconds to produce a second latex layer, wherein the second latex layer has a total solid content of 5% by weight to 40% by weight;
vii. drying the second latex layer coated on the former obtained in step (vi) at a temperature between 80°C to 200°C for a time period ranging from 20 seconds to 5 minutes;
viii. treating the second latex layer coated on the former obtained in step (vii) with hot water at a temperature between 40°C to 80°C for a time period ranging from 20 seconds to 5 minutes to leach out chemical residues to form pre-leached latex film;
ix. treating the pre-leached latex film coated on the former obtained in step (viii) with polymer solution for a time period ranging from 4 seconds to 30 seconds to produce polymer coated latex film, wherein the polymer coating is carried out by way of dipping the pre-leached latex film coated on the former into the polymer solution having a concentration ranging between 1.5% to 5.0%;
x. beading the polymer coated latex film coated on the former obtained in step (ix) to produce beaded latex film, wherein the beading is performed using roll brush and/or beading carpet to bead the end of latex film;
xi. curing the beaded latex film coated on the former obtained in step (x) at a temperature between 90°C to 150°C for a time period ranging from 5 minutes to 45 minutes to cured latex film;
xii. treating the cured latex film coated on the former obtained in step (xi) with hot water at a temperature between 40°C to 80°C for a time period ranging from 20 seconds to 5 minutes to leach out chemical residues to obtain post-leached latex film;
xiii. spraying hydrophilic solution onto the post-leached latex film coated on the former obtained in step (xii) or dipping the post-leached latex film coated on the former obtained in step (xii) into hydrophilic solution to obtain latex film with hydrophilic coating;
xiv. drying the latex film with hydrophilic coating coated on the former obtained in step (xiii) at a temperature between 80°C to 200°C for a time period ranging from 20 seconds to 5 minutes to produce glove with hydrophilic coating; and
xv. stripping the glove with hydrophilic coating coated on the former obtained in step (xiv) from the former; and
wherein the first and the second latex formulations are identical latex formulation and wherein the first and the second latex formulations includes chemical components and compositions thereof as described in Tables 1 and 5.

The step of spraying (which is an online process) is carried out by way of spraying the hydrophilic solution (as described in example 1) using any conventional liquid sprayer onto the post-leached latex film coated on the former at a temperature ranging between 30°C to 70°C, preferably 50°C for a duration ranging between 6 seconds to 25 seconds, preferably 10 seconds, wherein the hydrophilic solution is used at a weight concentration ranging between 0.1% to 5.0%, preferably 1.0%. The post-leached latex film coated on the former is continuously rotated during and after the spraying step to ensure even coating for a duration ranging between 5 seconds to 60 seconds, preferably 30 seconds to yield the latex film with hydrophilic coating.

The conventional liquid sprayer is handled with spraying speed between 1 litre per minute to 5 litres per minute, preferably 3 litres per minute at a pressure between 0.1 bar to 3.0 bar, preferably 1.0 bar under a temperature ranging between 30°C to 50°C, preferably 40°C. Thereafter, the latex film with hydrophilic coating is dried at a temperature ranging between 80°C to 200°C for a time period ranging from 20 seconds to 5 minutes to produce glove with hydrophilic coating.

Meanwhile, the step of coating is carried out by way of dipping the post-leached latex film coated on the former in a container containing the hydrophilic solution (as described in example 1) at a temperature ranging between 30°C to 70°C, preferably 50°C for a duration ranging between 6 seconds to 25 seconds, preferably 10 seconds to yield the latex film with hydrophilic coating, wherein the hydrophilic solution is used at a weight concentration ranging between 0.1% to 5.0%, preferably 1.0%. Thereafter, the latex film with hydrophilic coating is dried at a temperature ranging between 80°C to 200°C for a time period ranging from 20 seconds to 5 minutes to produce glove with hydrophilic coating.

### Test results for all the gloves

The gloves with hydrophilic coating on the interior surface of the glove are tested for hydrophilicity, whereby contact angle analysis is conducted to evaluate the hydrophilicity for different types of gloves by dropping a 5 µl water droplet on the interior surface of the gloves. This test is conducted by using contact angle analyser whereby the instrument is able to capture the droplet form in milliseconds.

Table 7 shows contact angles of water droplet against the interior surface of the glove for different types of gloves at different time intervals.

**Table 7: Contact angles of water droplet against the interior surface of the glove for different types of gloves at different time intervals**

| **Set** | **Contact angle (°) at different time interval** | | | | | |
|---|---|---|---|---|---|---|
| | 0s | 1s | 2s | 3s | 4s | 5s |
| ***Conventional glove 1** | 58 to 62 | 50 to 54 | 50 to 54 | 48 to 52 | 48 to 52 | 48 to 52 |
| ****Conventional glove 2** | 58 to 62 | 50 to 54 | 40 to 47 | 30 to 37 | 29 to 33 | 27 to 31 |
| **Glove of the present invention** | 58 to 62 | 25 to 29 | 15 to 19 | 13 to 17 | 9 to 13 | 6 to 10 |

| | | | | | | |
|---|---|---|---|---|---|---|
| *Conventional glove 1 is normal glove without hydrophilic coating **Conventional glove 2 is with hydrophilic coating, however the coating is not based on the present invention | | | | | | |

Based on the results obtained, it shows that the hydrophilicity of all gloves is almost similar in the beginning. Over time, the glove of the present invention shows significant reduction in the hydrophilicity whereby the contact angle reduced to 6° to 10° at 5s followed by conventional glove 2 and conventional glove 1. In general, the hydrophilicity property is said to be enhanced if the contact angle value is lowered.

Further, when donning the glove with wet hand or sweaty hand, hydrophilic coating of the present invention on the interior surface of the glove will function to spread the water droplets on the hands evenly and will act as a lubricant to reduce the surface friction and hence able to improve donning process. Having said the above, the glove of the present invention is able to display better hydrophilicity properties as compared to the conventional gloves.

Tables 8a and 8b show outcome of donning experience under both dry and wet conditions, whereby 10 users were appointed to carry out successive donning test under both the conditions with 3 sets of gloves of the same type. Simply, average time taken to don and doff first, second and the third glove of the same type will be recorded.

**Table 8a: Glove donning experience and time taken thereof for 3 sets of gloves under dry conditions**

| **Set** | **Average time taken for dry donning (s)** | | | **Donning experience** |
|---|---|---|---|---|
| | **First don** | **Second don** | **Third don** | |
| ***Conventional glove 1** | 5 to 10 | 10 to 15 | 10 to 15 | Easy > slightly hard > slightly hard |
| ****Conventional** | 3 to 5 | 5 to 10 | 5 to 10 | Easy > easy > |
| **glove 2** | | | | easy |
| **Glove of the present invention** | 1 to 3 | 3 to 5 | 3 to 5 | Easy > easy > easy |

| | | | | |
|---|---|---|---|---|
| *Conventional glove 1 is normal glove without hydrophilic coating **Conventional glove 2 is with hydrophilic coating, however the coating is not based on the present invention | | | | |

**Table 8b: Glove donning experience and time taken thereof for 3 sets under wet conditions**

| **Set** | **Average time taken for wet donning (s)** | | | **Donning experience** |
|---|---|---|---|---|
| | **First don** | **Second don** | **Third don** | |
| ***Conventional glove 1** | 20 to 25 | 35 to 40 | 45 to 50 | Hard > harder > very hard |
| ****Conventional glove 2** | 10 to 15 | 15 to 20 | 18 to 22 | Easy > normal > hard |
| **Glove of the present invention** | 5 to 10 | 8 to 12 | 8 to 12 | Easy > easy > easy |

| | | | | |
|---|---|---|---|---|
| *Conventional glove 1 is normal glove without hydrophilic coating **Conventional glove 2 is with hydrophilic coating, however the coating is not based on the present invention | | | | |

Based on the results obtained, it is noticeable that the donning difficulty under both the conditions, particularly wet condition increases when succeeding gloves are donned and doffed, as represented by conventional gloves 1 and 2. The glove of the present invention shows that the wet donning performance is almost consistent over 3 donning. Hence, it is proved that glove of the present invention can be donned one after another without affecting the user's donning performances.

Table 9 shows outcome of double donning experience, whereby 10 users were appointed to carry out double donning test for different types of gloves. Two gloves of the same type are donned one after another. The duration for donning two gloves is recorded.

**Table 9: Double glove donning experience and time taken thereof for different types of gloves**

| **Set** | **Average donning duration (s)** | **Donning experience** |
|---|---|---|
| ***Conventional glove 1** | 7 to 10 | Slightly hard |
| ****Conventional glove 2** | 4 to 7 | Easy |
| **Glove of the present invention** | 2 to 5 | Very easy |

| | | |
|---|---|---|
| *Conventional glove 1 is normal glove without hydrophilic coating **Conventional glove 2 is with hydrophilic coating, however the coating is not based on the present invention | | |

Based on the results obtained, it is noticeable that without the hydrophilic coating of the present invention, the double glove donning is slightly hard to be don, as displayed by the conventional glove 1. With presence of hydrophilic coating of the present invention, the surface friction of donning surface is significantly reduced and hence it is easier for double glove donning.

Table 10 shows average coefficient of friction analysis of different types of gloves under dry and wet conditions with and without hydrophilic coating of the present invention. Coefficient of friction (COF) analysis is conducted under dry and wet conditions to evaluate surface friction between the same surface of the glove under dry and wet conditions.

**Table 10: Average coefficient of friction of different types of gloves under dry and wet conditions with and without hydrophilic coating of the present invention**

| **Set** | **Hydrophilic coating of the present invention** | **Average dry COF** | **Average wet COF** |
|---|---|---|---|
| **Chlorinated acrylonitrile butadiene rubber glove** | Present | 0.20 to 0.24 | 0.23 to 0.27 |
| | Absent | 0.30 to 0.34 | 0.46 to 0.50 |
| **Polymer coated acrylonitrile butadiene rubber glove** | Present | 0.16 to 0.20 | 0.15 to 0.20 |
| | Absent | 0.24 to 0.28 | 0.30 to 0.35 |
| **Chlorinated natural rubber glove** | Present | 0.18 to 0.21 | 0.20 to 0.24 |
| | Absent | 0.26 to 0.30 | 0.35 to 0.40 |
| **Polymer coated natural rubber glove** | Present | 0.19 to 0.24 | 0.17 to 0.21 |
| | Absent | 0.25 to 0.29 | 0.30 to 0.35 |
| **Polymer coated Polyisoprene rubber glove** | Present | 0.15 to 0.25 | 0.25 to 0.30 |
| | Absent | 0.20 to 0.30 | 0.30 to 0.40 |
| **Polymer coated Hybrid polychloroprene rubber/ acrylonitrile butadiene rubber glove** | Present | 0.10 to 0.20 | 0.15 to 0.25 |
| | Absent | 0.15 to 0.20 | 0.20 to 0.30 |
| **Polymer coated Polychloroprene rubber glove** | Present | 0.15 to 0.20 | 0.18 to 0.21 |
| | Absent | 0.25 to 0.30 | 0.30 to 0.40 |

Based on results obtained, it shows that the average dry COF is reduced while average wet COF is reduced significantly when the hydrophilic coating of the present invention is applied on the interior surface of the gloves. This indicates that the hydrophilic coating of the present invention is able to reduce the surface friction between the surface of the glove under both dry and wet conditions.

Table 11 shows surface roughness of different types of gloves with and without hydrophilic coating of the present invention, whereby the hydrophilic coating of the present invention is applied on the interior surface of the gloves and the surface roughness on the interior surface of the gloves are evaluated.

**Table 11: Surface roughness of different types of gloves with and without hydrophilic coating of the present invention**

| **Sets** | **Hydrophilic coating** | **Average surface roughness, µm** |
|---|---|---|
| Chlorinated acrylonitrile butadiene rubber glove | Present | 0.8 to 1.2 |
| | Absent | 1.5 to 1.9 |
| **Polymer coated acrylonitrile butadiene rubber glove** | Present | 0.4 to 0.8 |
| | Absent | 0.6 to 1.0 |
| **Chlorinated natural rubber glove** | Present | 0.7 to 1.1 |
| | Absent | 1.3 to 1.7 |
| **Polymer coated natural rubber glove** | Present | 0.5 to 0.7 |
| | Absent | 0.8 to 1.2 |
| **Polymer coated Polyisoprene rubber glove** | Present | 0.3 to 0.7 |
| | Absent | 0.5 to 1.0 |
| **Polymer coated Hybrid polychloroprene rubber/acrylonitrile butadiene rubber glove** | Present | 0.7 to 1.1 |
| | Absent | 1.3 to 1.7 |
| **Polymer coated Polychloroprene rubber glove** | Present | 0.5 to 0.7 |
| | Absent | 0.8 to 1.2 |

Based on results obtained, it shows that by applying hydrophilic coating of the present invention on the interior surface of the gloves, the surface roughness is reduced which indicates that the hydrophilic coating of the present invention is able to improve the surface roughness and smoothness of glove.

As a whole, all the gloves with hydrophilic coating of the present invention are able to overcome the conventional shortcomings since all the gloves with hydrophilic coating of the present invention improves the surface hydrophilic properties of the gloves and in return the gloves are able to be donned one after another easily under both dry and wet conditions, particularly under wet condition without affecting the donning performance and efficiency of the glove users.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises", "comprising", "including" and "having" are inclusive and therefore specify the presence of stated features, integers, steps, operations, elements and/or components, but do not preclude the presence or addition of one or more other features, integers, steps, operations, elements, components and/or groups therefrom.

The method steps, processes and operations described herein are not to be construed as necessarily requiring their performance in the particular order discussed or illustrated, unless specifically identified as an order of performance. It is also to be understood that additional or alternative steps may be employed. The use of the expression "at least" or "at least one" suggests the use of one or more elements, as the use may be in one of the embodiments to achieve one or more of the desired objects or results.

## Claims

1. A hydrophilic coating that includes a silicone emulsion, a wax dispersion, a stearate based chemical, a surfactant and water, wherein the silicone emulsion is used at a weight concentration ranging between 0.01% to 1.0% in the hydrophilic coating, wherein the wax dispersion is used at a weight concentration ranging between 0.01% to 1.0% in the hydrophilic coating, wherein the stearate based chemical is used at a weight concentration ranging between 0.01% to 1.0% in the hydrophilic coating, wherein the surfactant is used at a weight concentration ranging between 0.4% to 2.0% in the hydrophilic coating and wherein remaining of the hydrophilic coating is filled by the water to a weight concentration of 100%.

2. The hydrophilic coating as claimed in claim 1 wherein the silicone emulsion is used at a weight concentration ranging between 0.05% to 0.5% in the hydrophilic coating.

3. The hydrophilic coating as claimed in claim 1 or 2 wherein the wax dispersion is used at a weight concentration ranging between 0.05% to 0.5% in the hydrophilic coating.

4. The hydrophilic coating as claimed in any of claims 1 to 3 wherein the stearate based chemical is used at a weight concentration ranging between 0.1% to 0.5% in the hydrophilic coating.

5. The hydrophilic coating as claimed in any of claims 1 to 4 wherein the surfactant is used at a weight concentration ranging between 0.5% to 1.0% in the hydrophilic coating.

6. The hydrophilic coating as claimed in any of the forgoing claims wherein the silicone emulsion is any one selected from the group consisting of polydimethylsiloxane silicone emulsion, amino type silicone, organo functional silicone emulsion, resin type silicone emulsion, film forming silicone and mixtures thereof.

7. The hydrophilic coating as claimed in any of the forgoing claims wherein the wax dispersion is any one selected from the group consisting of high density polyethylene wax, low density polyethylene wax, polypropylene wax, paraffin wax, carnauba wax, polytetrafluoroethylene wax and mixtures thereof.

8. The hydrophilic coating as claimed in any of the forgeoing claims wherein the stearate based chemical is any one selected from the group consisting of potassium stearate, calcium stearate, magnesium stearate, zinc stearate and mixtures thereof.

9. The hydrophilic coating as claimed in any of the foregoing claims wherein the surfactant is any one selected from the group consisting of any anionic surfactant, any cationic surfactant and mixtures thereof, wherein the anionic surfactant is preferably sodium lauryl ether sulphate and wherein the cationic surfactant is preferably cetylpyridinium chloride.

10. A method to prepare a glove with a hydrophilic coating as claimed in any of claims 1-9 wherein the method comprises the steps of:
i. cleaning and/or washing formers to produce cleaned formers;
ii. dipping the cleaned formers obtained in step (i) into a coagulant solution to coat a coagulant layer on the former;
iii. drying the coagulant layer coated on the former obtained in step (ii) at a temperature between 80°C to 200°C for a time period ranging from 1 minute to 10 minutes;
iv. dipping the former obtained in step (iii) into first latex formulation to produce a first latex layer;
v. drying the first latex layer coated on the former obtained in step (iv) at a temperature between 80°C to 150°C for a time period ranging from 20 seconds to 5 minutes;
vi. dipping the former obtained in step (v) into second latex formulation to produce a second latex layer;
vii. drying the second latex layer coated on the former obtained in step (vi) at a temperature between 80°C to 200°C for a time period ranging from 20 seconds to 5 minutes;
viii. treating the second latex layer coated on the former obtained in step (vii) with hot water at a temperature between 40°C to 80°C for a time period ranging from 20 seconds to 5 minutes to leach out chemical residues to form pre-leached latex film;
ix. beading the pre-leached latex film coated on the former obtained in step (viii) to produce beaded latex film;
x. curing the beaded latex film coated on the former obtained in step (ix) at a temperature between 90°C to 150°C for a time period ranging from 5 minutes to 45 minutes and thereafter cooled to produce cooled latex film, wherein the step of cooling is carried out by way of dipping the cured latex film coated on the former into cold water having a temperature ranging between 20°C to 40°C for a time period ranging between 20 seconds to 5 minutes;
xi. treating the cooled latex film coated on the former obtained in step (x) with chlorine water to obtain treated latex film;
xii. treating the treated latex film coated on the former obtained in step (xi) with hot water at a temperature between 40°C to 80°C for a time period ranging from 20 seconds to 5 minutes to leach out chemical residues to obtain post-leached latex film;
xiii. spraying hydrophilic solution onto the post-leached latex film coated on the former obtained in step (xii) or dipping the post-leached latex film coated on the former obtained in step (xii) into hydrophilic solution to obtain latex film with hydrophilic coating;
xiv. drying the latex film with hydrophilic coating coated on the former obtained in step (xiii) at a temperature between 80°C to 200°C for a time period ranging from 20 seconds to 5 minutes to produce glove with hydrophilic coating; and
xv. stripping the glove with hydrophilic coating coated on the former obtained in step (xiv) from the former; and
wherein the first and the second latex formulations are selected from the group consisting of acrylonitrile butadiene rubber, natural rubber, polyisoprene rubber, polychloroprene rubber, styrene butadiene rubber, butadiene copolymers rubber, polyurethanes rubber, rubber of vinyl containing substances, thermoplastic rubber, vinyl acetate ethylene rubber and mixtures thereof and wherein the first and the second latex formulations are identical latex formulation.

11. A method to prepare a glove with a hydrophilic coating as claimed in any of claims 1-9 wherein the method comprises the steps of:
i. cleaning and/or washing formers to produce cleaned formers;
ii. dipping the cleaned formers obtained in step (i) into a coagulant solution to coat a coagulant layer on the former;
iii. drying the coagulant layer coated on the former obtained in step (ii) at a temperature between 80°C to 200°C for a time period ranging from 1 minute to 10 minutes;
iv. dipping the former obtained in step (iii) into first latex formulation to produce a first latex layer;
v. drying the first latex layer coated on the former obtained in step (iv) at a temperature between 80°C to 150°C for a time period ranging from 20 seconds to 5 minutes;
vi. dipping the former obtained in step (v) into second latex formulation to produce a second latex layer;
vii. drying the second latex layer coated on the former obtained in step (vi) at a temperature between 80°C to 200°C for a time period ranging from 20 seconds to 5 minutes;
viii. treating the second latex layer coated on the former obtained in step (vii) with hot water at a temperature between 40°C to 80°C for a time period ranging from 20 seconds to 5 minutes to leach out chemical residues to form pre-leached latex film;
ix. treating the pre-leached latex film coated on the former obtained in step (viii) with polymer solution to produce polymer coated latex film, wherein the polymer coating is carried out by way of dipping the pre-leached latex film coated on the former into the polymer solution having a concentration ranging between 1.5% to 5.0%;
x. beading the polymer coated latex film coated on the former obtained in step (ix) to produce beaded latex film;
xi. curing the beaded latex film coated on the former obtained in step (x) at a temperature between 90°C to 150°C for a time period ranging from 5 minutes to 45 minutes to cured latex film;
xii. treating the cured latex film coated on the former obtained in step (xi) with hot water at a temperature between 40°C to 80°C for a time period ranging from 20 seconds to 5 minutes to leach out chemical residues to obtain post-leached latex film;
xiii. spraying hydrophilic solution onto the post-leached latex film coated on the former obtained in step (xii) or dipping the post-leached latex film coated on the former obtained in step (xii) into hydrophilic solution to obtain latex film with hydrophilic coating;
xiv. drying the latex film with hydrophilic coating coated on the former obtained in step (xiii) at a temperature between 80°C to 200°C for a time period ranging from 20 seconds to 5 minutes to produce glove with hydrophilic coating; and
xv. stripping the glove with hydrophilic coating coated on the former obtained in step (xiv) from the former; and
wherein the first and the second latex formulations are selected from the group consisting of acrylonitrile butadiene rubber, natural rubber, polyisoprene rubber, polychloroprene rubber, styrene butadiene rubber, butadiene copolymers rubber, polyurethanes rubber, rubber of vinyl containing substances, thermoplastic rubber, vinyl acetate ethylene rubber and mixtures thereof and wherein the first and the second latex formulations are identical latex formulation.

12. The method to prepare a glove as claimed in claim 10 or claim 11 wherein the step of spraying is carried out by way of spraying the hydrophilic solution onto the post-leached latex film coated on the former at a temperature ranging between 30°C to 70°C for a duration ranging between 6 seconds to 25 seconds while the post-leached latex film coated on the former is continuously rotated during and after the spraying step to ensure even coating for a duration ranging between 5 seconds to 60 seconds to yield the latex film with hydrophilic coating,
wherein the spraying is preferably carried out at a speed between 1 litre per minute to 5 litres per minute at a pressure between 0.1 bar to 3.0 bar under a temperature ranging between 30°C to 50°C.

13. The method to prepare a glove as claimed in claim 10 or claim 11 wherein the the step of coating is carried out by way of dipping the post-leached latex film coated on the former in a container containing the hydrophilic solution at a temperature ranging between 30°C to 70°C for a duration ranging between 6 seconds to 25 seconds to yield the latex film with hydrophilic coating.

14. The method to prepare a glove as claimed in claim 12 or claim 13 wherein the hydrophilic solution is used at a weight concentration ranging between 0.1% to 5.0%.

15. A glove with a hydrophilic coating, wherein the hydrophilic coating is as claimed in any claims 1 to 9 and wherein the glove is any one from the group consisting of acrylonitrile butadiene rubber, natural rubber, polyisoprene rubber, polychloroprene rubber, styrene butadiene rubber, butadiene copolymers rubber, polyurethanes rubber, rubber of vinyl containing substances, thermoplastic elastomer, vinyl acetate ethylene rubber and mixtures thereof, or
a glove with a hydrophilic coating, wherein the glove is prepared as claimed in any claims 10 to 15 and wherein the glove is any one from the group consisting of acrylonitrile butadiene rubber, natural rubber, polyisoprene rubber, polychloroprene rubber, styrene butadiene rubber, butadiene copolymers rubber, polyurethanes rubber, rubber of vinyl containing substances, thermoplastic elastomer, vinyl acetate ethylene rubber and mixtures thereof.
